# EUROPÄISCHE PATENTSCHRIFT

(11) **EP 1 089 892 B1**
(45) Veröffentlichungstag und Bekanntmachung des Hinweises auf die Patenterteilung: **22.05.2002**
(21) Anmeldenummer: 99941387.5
(22) Anmeldetag: 22.06.1999
(51) Int. Cl.: B60K 15/00

(54) **VERFAHREN UND EINRICHTUNG ZUR BESTIMMUNG DER KRAFTSTOFF-RESTMENGE IN EINEM KRAFTSTOFFSYSTEM EINES KRAFTWAGENS**
PROCESS AND DEVICE FOR DETERMINING THE RESIDUAL AMOUNT OF FUEL IN A MOTOR VEHICLE FUEL SYSTEM
PROCEDE ET DISPOSITIF POUR DETERMINER LA QUANTITE RESIDUELLE DE CARBURANT DANS UN SYSTEME DE CARBURANT D'UN VEHICULE AUTOMOBILE

(30) Priorität: 25.06.1998 DE 19827944
(43) Veröffentlichungstag der Anmeldung: 11.04.2001
(73) Patentinhaber: Kautex Textron GmbH & Co. KG., 53229 Bonn (DE)
(72) Erfinder: WAGNER, Axel, D-53225 Bonn-Beuel (DE); RÜDIGER, Walter, D-53123 Bonn (DE)
(74) Vertreter: Patentanwälte Lippert, Stachow, Schmidt & Partner
(86) Internationale Anmeldenummer: DE9901853
(87) Internationale Veröffentlichungsnummer: WO9967103

(56) Entgegenhaltungen:
- DE-A- 3 224 919
- DE-A- 3 825 630
- DE-A- 4 332 946
- DE-A- 19 547 097
- DE-A- 19 610 154
- DE-A- 19 727 923

## Beschreibung

Die Erfindung betrifft ein Verfahren und eine Vorrichtung gemäß dem Oberbegriff des Anspruches 1 bzw. des Anspruches 8.

Aus DE-A1- 32 24 919 ist eine gattungsgemäße Meßvorrichtung für Betriebsflüssigkeits-Vorräte von Kraftfahrzeugen bekannt, die mit einem Kraftstoffsystem versehen sind, welches einen Hauptvorratsbehälter und einen Nebenvorratsbehälter aufweist, der im Vergleich zum Hauptvorratsbehälter ein wesentlich kleineres Volumen hat und in sich geschlossen ist und von einer Pumpe aus dem Hauptvorratsbehälter mit Kraftstoff versorgt wird.

Dabei ist dem Hauptvorratsbehälter und dem Nebenvorrats-behälter eine Haupt-Sensoreinrichtung bzw. eine Hilfs-Sensoreinrichtung zur Feststellung des Kraftstoffvorrates zugeordnet. Bis zu dem Zeitpunkt, zu welchem der Hauptvorratsbehälter vollständig entleert ist, liefert die dem Hauptvorratsbehälter zugeordnete Haupt-Sensoreinrichtung ein Signal, welches die Füllhöhe im Kraftstofftank angibt, so daß anhand der Tankgeometrie ein Mengenwert errechnet werden kann, der zu einer Anzeige führt, welche die jeweils insgesamt im Hauptvorratsbehälter und Nebenvorratsbehälter Vorhandene Kraftstoffmenge angibt. Nach vollständiger Entleerung des Hauptvorratsbehälters erfolgt die Anzeige des im Nebenvorratsbehälter noch vorhandenen Kraftstoffs durch die letzterem zugeordnete Hilfs-Sensoreinrichtung. Dadurch soll eine genauere Anzeige der noch vorhandenen Kraftstoffreserve erreicht werden.

Aus DE 196 10 154 A1 sind eine Tankanzeige und ein Verfahren zur Ermittlung des Restvolumens in einem Tank bekannt, der ein dort Schwalltopf genanntes Reservoir und einen Zusatztank aufweist, aus welchem der Kraftstoff bei Erreichen eines bestimmten geringen Füllstandes im Haupttank in letzteren entleerbar ist. Das jeweilige Restvolumen an Kraftstoff, welches aus dem Zusatztank stammt, wird aufgrund von Kraftstoffverbrauchswerten errechnet. Auf diese Weise mag zwar eine ausreichend genaue Bestimmung der jeweils im Tank noch vorhandenen Restmenge an Kraftstoff möglich sein. Dies wird jedoch mit einem erheblichen zusätzlichen Aufwand erkauft, da der Haupttank mit einem Zusatztank versehen sein muß, der über eine mittels eines Ventils verschließbare Leitung mit dem Reservoir oder Schwalltopf verbunden ist.

Ferner ist aus DE 38 25 630 A1 ein Verfahren zur Bestimmung und Anzeige der in einem Vorratsbehälter enthaltenen Vorratsmenge an Kraftstoff bekannt, bei welchem ein statischer Geber vorgesehen ist, der den Anfangswert für die Anzeige liefert. Die während des Betriebes eines Kraftfahrzeuges auflaufenden Verbrauchswerte werden durch Verbrauchsmessungen bzw. die Auswertung von verbrauchsbestimmenden Motorkennwerten berechnet und von diesem Anfangswert subtrahiert. Die sich daraus ergebende Differenz wird zur Anzeige gebracht. Die Genauigkeit der Anzeige der jeweils noch vorhandenen Restmenge hängt dabei auch im Reservebereich, also wenn nur noch wenig Kraftstoff im Tank vorhanden ist, von der Genauigkeit ab, mit welcher zunächst das gesamte Anfangsvolumen durch den Geber bestimmt wird, der einen den Niveauschwankungen der Vorratsmenge ungedämpft ausgesetzten Meßschwimmer enthält, wobei der Anfangswert der Vorratsmenge auch durch einen Mittelwert ersetzt werden kann, der aus in größeren zeitlichen Abständen erfaßten Geber-Ausgangssignalen gebildet wird. DE 38 25 630 A1 offenbart keine Einzelheiten bezüglich der Ausgestaltung des Tanks und der Definition einer bestimmten Kraftstoffmenge, die bei weitgehend entleertem Tank noch eine Reservemenge für eine bestimmte Fahrstrecke bildet.

Die Erfindung geht aus von einem Verfahren und einer Einrichtung zur Bestimmung der im Kraftstofftank eines Kraftfahrzeugs jeweils befindlichen Kraftstoffmenge gemäß dem Oberbegriff des Anspruches 1 bzw. dem des Anspruches 8, wobei der jeweilige Oberbegriff dem Stand der Technik gemäß DE-A1-32 24 919 Rechnung trägt.

Es ist Aufgabe der Erfindung, mit einfachen Mitteln eine möglichst genaue Bestimmung der im Kraftstoffsystem in der letzten Phase der Entleerung desselben jeweils noch vorhandenen Restmenge zu ermöglichen, wenn Kraftstoff nur noch im Schwalltopf, der auch als Reservoir bezeichnet wird, vorhanden ist, um so dem Fahrer eine genauere Information über die jeweils noch vorhandene Kraftstoffmenge verfügbar zu machen. Dabei soll es nicht notwendig sein, daß der dazu verwendete Tank sich in seinem Aufbau grundsätzlich von dem üblicher Tanks unterscheidet.

Diese Aufgabe wird mit den Mitteln, die im Kennzeichen des Anspruches 1 bzw. des Anspruches 8 angeführt sind, gelöst.

Weitere Merkmale der Erfindung sind unter anderem in den Unteransprüchen angeführt.

Besonders zweckmäßig ist ein Verfahren, bei welchem der zeitpunkt, an welchem die Bestimmung der Restmenge im Reservoir durch die Verbrauchsrechnung beginnt, in Abhängigkeit vom Füllzustand im Hauptvorratsbehälter und und einem bestimmten Füllstand im Reservoir festgelegt wird beispielsweise derart, daß ein dem Hauptvorratsbehälter zugeordneter Füllstandsmesser ein Signal abgibt, das besagt, daß der Hauptvorratsbehälter leer ist, und zusätzlich ein Signal von einem dem Reservoir zugeordneten Sensor bei Unterschreiten des bestimmten Füllstandes im Reservoir ausgelöst wird. Der Sensor ist zweckmäßigerweise unterhalb des maximalen Füllstandes des Reservoirs angeordnet, so daß die Verbrauchsberechnung erst dann beginnt, wenn der Flüssigkeitsstand im Reservoir sich in einem Abstand von dessen oberer Begrenzung befindet, so daß Schwallbewegungen der Flüssigkeit aufgrund der Fahrdynamik sich weniger stark auswirken. Ferner wird dadurch, daß der Sensor im Reservoir nicht dem darin maximal möglichen Füllstand zugeordnet ist, vermieden, daß die Restmengenberechnung zunächst eingeschaltet und dann wieder ausgeschaltet wird, wenn bei fast leerem Hauptbehälter z. B. in Abhängigkeit vom Fahrzustand noch kleine Mengen an Kraftstoff in das Reservoir gefördert werden, so daß der Füllstand wieder den Sensor erreicht Die Anordnung des Sensor im Reservoir sollte deshalb so gewählt werden, daß unter üblichen Betriebsbedingungen kein Kraftstoff mehr aus dem Hauptvorratsbehälter in das Reservoir gefördert wird, nachdem der durch die Position des Sensors im Reservoir bestimmte Füllstand unterschritten und dadurch die Berechnung des Kraftstoffverbrauches zur Ermittlung der Kraftstoffrestmenge ausgelöst worden ist.

In Abhängigkeit von der Dimension des Reservoirs insbesondere in der Ebene, in welcher die Fahrbewegungen des Kraftfahrzeuges stattfinden, kann es auch zweckmäßig sein, das Reservoir mit Einbauten zu versehen, die Bewegungen des Kraftstoffs im Reservoir weitgehend reduzieren. Wenn der Beginn des Zeitpunktes, zu welchem die Bestimmung der jeweils vorhandenen Restmenge durch die Berechnung des Kraftstoffverbrauches beginnt, in Abhängigkeit vom Vorliegen zweier Signale bestimmt wird - eines, welches anzeigt, daß der Hauptvorratsbehälter im wesentlichen leer ist und ein späteres, zweites Signal, welches den Füllstand des Reservoirs anzeigt - kann die zu Beginn der Verbrauchsberechnung noch vorhandene Flüssigkeitsmenge mit einer Genauigkeit bestimmt werden, die für alle praktischen Erfordernisse ausreicht.

Dabei kann es zweckmäßig sein, den Tank so auszubilden, daß die Befüllung desselben über das Reservoir erfolgt. Dazu kann ein Füllrohr vorgesehen sein, welches die Einfüllöffnung des Tanks mit dem Reservoir verbindet.

Wenn in der Betriebsphase, in welcher die Kraftstoff-Restmenge im Reservoir durch Verbrauchsmessung ermittelt wird, Kraftstoff z. B. aus einem Reservekanister in einer Menge nachgefüllt wird, die nicht zur Füllung des Reservoirs bis zu dem der Position des Sensors entsprechenden Füllstand ausreicht, wäre eine Korrektur der Ermittlung der Kraftstoff-Restmenge nicht möglich. Vielmehr bliebe die Anzeige der Kraftstoff-Restmenge auf dem vor der Nachfüllung errechneten Wert. Deshalb kann es zweckmäßig sein, dem Reservoir einen zweiten Sensor zuzuordnen, der in einem Abstand unterhalb des ersten Sensors positioniert ist und somit auf ein kleineres Kraftstoffvolumen im Reservoir anspricht. Sobald bei Betrieb des Kraftfahrzeugs das Niveau des zweiten Sensors im Reservoir unterschritten wird, kann das dadurch ausgelöste Signal dazu benutzt werden, die Bestimmung der im Reservoir noch befindlichen Kraftstoff-Restmenge wieder über den Verbrauch zu errechnen, wobei dann natürlich von einem Anfangswert ausgegangen wird, der kleiner ist als der des Volumens, welches der Position des ersten Sensors entspricht. Zweckmäßigerweise wird der zweite Sensor so angeordnet, daß nach dem Nachfüllen von Kraftstoff aus einem Reservekanister mit üblichem Volumen (z. B. 5 1) der zweite Sensor unterhalb des sich dann einstellenden Flüssigkeitsniveaus befindet.

Gemäß einem weiteren Vorschlag der Erfindung kann es zweckmäßig sein, den Motor des Kraftfahrzeuges nach Unterschreiten einer bestimmten Mindest-Kraftstoffmenge im Reservoir automatisch abzuschalten. Damit soll verhindert werden, daß in das Kraftstoff-Versorgungssystem für den Motor, insbesondere in dessen Hochdruckteil, Luft gelangt, die Betriebsstörungen verursacht. Vor dem automatischen Abschalten des Motors sollte der Fahrer in einem ausreichenden zeitlichen Abstand auf das baldige Abschalten des Motors durch eine entsprechende Anzeige hingewiesen werden.

Im übrigen ist die Anordnung so getroffen, daß der dem Hauptvorratsbehälter zugeordnete Füllstandmesser wieder aktiviert wird, sobald dieser mit ansteigendem Kraftstoffspiegel im Hauptvorratsbehälter von der Leeranzeige auf die Anzeige eines bestimmten Flüssigkeitsstandes im Hauptvorratsbehälter schaltet. Das Signal kann gleichzeitig auch den Bordcomputer oder dgl. so beeinflussen, daß die Berechnung des Kraftstoffverbrauches beendet wird. Der Computer wird für diese Berechnung erst wieder aktiviert, wenn im Zuge des Fahrbetriebes wieder die bereits genannten Voraussetzungen eintreten, nämlich Leeranzeige für den Hauptvorratsbehälter und Unterschreiten des Füllstandes im Reservoir, der durch die Position des ersten Sensors festgelegt ist.

In der Zeichnung sind zwei Ausführungsbeispiele der Erfindung im Schema dargestellt. Es zeigen:
- Fig. 1: einen Längsschnitt durch eine erste Ausführung eines Tanks,
- Fig. 2: einen Längsschnitt durch eine zweite Ausführung.

Der Kraftstofftank 10 kann auf unterschiedliche Weisen einteilig oder mehrteilig aus Kunststoff oder Metall hergestellt sein. Er ist mit einem Restmengenbehälter oder Reservoir 12 versehen, der bzw. das ein merklich kleineres Volumen als der das Reservoir 12 umgebende Hauptraum 34 aufweist und den Reservebereich des Kraftstoffsystems darstellt. Dieses Reservoir 12 ist in geeigneter Weise am Boden 14 des Tankes befestigt. Das oben teilweise offene Reservoir 12 endet in einem Abstand von der oberen Wand 16 des Tanks. Das Reservoir ist an seinem oberen Ende mit einem innen umlaufenden Rand 62 versehen, so daß lediglich eine Überlauföffnung 64 vorhanden ist. Ansonsten ist das Reservoir in sich so geschlossen, daß kein Kraftstoff aus dem Reservoir in den Hauptvorratsbehälter 34 austreten kann.

Der Boden 18 des Reservoirs 12 ist mit einem mittleren Bereich 20 versehen, der im wesentlichen vertikal zur Längsachse des Reservoirs und parallel zum Boden des Tanks 14 verläuft. Der an den mittleren Bereich 20 anschließende äußere Bereich 22 des Bodens 18 ist zum Umfang des Reservoirs hin ansteigend verlaufend angeordnet, so daß dieser äußere Bereich 18 ausgehend vom mittleren Bereich 20 einen in Richtung auf den Umfang zunehmenden Abstand vom Boden 14 des Tanks aufweist. Um das Reservoir 12 innerhalb des Tanks 10 mit der notwendigen Stabilität anbringen zu können, ist er unterseitig im äußeren Bodenbereich mit im wesentlichen radialen Rippen 24 versehen, die in Abständen über den Umfang des Reservoirs angeordnet sind und auf dem Boden 14 des Tanks aufliegen.

Innerhalb des Reservoirs 12 ist im mittleren und tiefsten Bereich 20 des Bodens 18 eine einstufige elektrische Kraftstoffpumpe 26 befestigt, an die eine zum Motor führende Leitung 28 angeschlossen ist, in die innerhalb des Tanks 10 in bekannter Weise ein Druckregler 30 eingeschaltet ist, von dem eine Rückführleitung 32 abgeht. Im Druckregler 30 erfolgt die Abzweigung der überschüssigen Kraftstoffmenge, die durch die außerhalb des Reservoirs 12 befindliche Rückführleitung 32 in den das Reservoir 12 umgebenden Raum 34 des Tankes 10 zurückgeführt wird. Am ausströmseitigen Ende ist die Rückführleitung 32 mit der Treibdüse 36 einer Saugstrahlpumpe 38 versehen, deren Fangdüse 40 das einströmseitige Ende eines Überlaufrohres 42 bildet, wie dies in der Zeichnung dargestellt ist. Das Überlaufrohr ist im wesentlichen vertikal verlaufend angeordnet und mündet in einem geringen Abstand von der oberen Begrenzung des Reservoirs 12 innerhalb desselben und ist flüssigkeitsdicht durch den äußeren Bereich 22 des Bodens hindurchgeführt, dessen Ausgestaltung die Unterbringung der Saugstrahlpumpe 38 im Bereich unterhalb des Reservoirs 12 ermöglicht.

Der Tank ist in seiner oberseitigen Wand 16 mit einer Öffnung 44 versehen, die unter Zwischenschaltung einer Dichtung 46 durch einen Deckel 48 verschlossen ist. Durch diesen Deckel 48 sind die zum Motor führende Kraftstoffleitung 28 sowie elektrische Leitungen 50 für die Energieversorgung der Pumpe 26 und elektrische Anschlußleitungen 52 und 54 flüssigkeitsdicht hindurchgeführt. Die Leitung 52 dient der Verbindung zwischen einem kapazitiven oder in anderer Weise ausgebildeten Füllstandsmesser 56 und einem elektronischen Rechner 57, bei dem es sich um den Bordcomputer des Fahrzeuges handeln kann. Die Leitung 54 stellt die Verbindung zwischen einem ersten Sensor 59 und/oder einem zweiten Sensor 68 im Reservoir 12 sowie dem Rechner her. Der Füllstandsmesser 56 ist in dem das Reservoir 12 umgebenden Hauptraum 34 des Tanks 10, erster Sensor 59 und zweiter Sensor 68 sind innerhalb des Reservoirs 12 in einem Tauchrohr 58 angeordnet.

Der dem Motor zuzuführende Kraftstoff wird dem Reservoir 12 entnommen, wobei der über die Saugstrahlpumpe 38 aus dem Hauptraum 34 des Tanks in das Reservoir geförderte Kraftstoff das Niveau innerhalb des Reservoirs 12 immer auf einer maximalen Höhe hält, solange noch Kraftstoff aus dem Raum 34 gefördert wird.

Die Füllstandsbestimmung im Tank 10 erfolgt, solange noch Kraftstoff in dem das Reservoir 12 umgebenden Hauptraum 34 vorhanden ist, über den Füllstandmesser 56, der in üblicher Weise, z. B. auch als Schwimmergeber, ausgebildet sein kann. Es sind aber auch andere Füllstandsmesser verwendbar. Bis zur mehr oder weniger vollständigen Entleerung des das Reservoir 12 umgebenden Raums 34 liefert der Füllstandsmesser 56 die die Füllhöhe des Raumes 34 angebenden Signale, aus denen die jeweils noch vorhandene Kraftstoffmenge bestimmt wird.

In dem Zeitpunkt, in dem der Leerzustand des das Reservoir 12 umgebenden Raumes 34 durch den Füllstandsmesser 56 angezeigt wird, erfolgt eine Signalgebung an den elektronischen Rechner 57. Dieses Signal bewirkt, daß nunmehr der im System jeweils noch vorhandene Kraftstoff, der praktisch ausschließlich im Reservoir 12 vorhanden ist, und dessen Volumen bestimmt ist, über den Verbrauch errechnet wird und die Anzeige der jeweils noch vorhandenen Kraftstoffmenge aus der Differenz zwischen einem definierten Volumen des Reservoirs und dem bis zum Zeitpunkt des Eingangs des Signals erfolgten Verbrauches darstellt. Der Verbrauch ist ohne weiteres aus den jeweils verfügbaren Betriebsdaten der Einrichtung für die Motorsteuerung durch den Rechner ermittelbar. Es liegt auf der Hand, daß so auf sehr einfache Weise eine sehr genaue Anzeige gerade in der Betriebsphase eines Kraftfahrzeuges möglich ist, in welcher die Reservemenge des Kraftstoffes, die sich in diesem Fall im Reservoir 12 befindet, als letzte Teilmenge des insgeamt jeweils im System vorhanden gewesenen Kraftstoffes verbraucht wird. Der erste Sensor 59 befindet sich in einem verhältnismäßig kurzen Abstand unterhalb der oberen Begrenzung des Reservoirs 12. Er kann - ggf. alternativ - ebenfalls dazu benutzt werden, das Signal auszulösen, durch welches die im Reservoir jeweils noch befindliche Kraftstoff-Restmenge über den Kraftstoffverbrauch des Motors errechnet wird. Es kann aber vorteilhaft sein, das Umschalten der Feststellung der Kraftstoff-Restmenge von der Anzeige des Füllstandmessers 56 auf die Verbrauchsberechnung davon abhängig zu machen, daß sowohl das Leersignal vom Füllstandsmesser 56 als auch ein Signal vom ersten Sensor 59 an den Rechner 57 abgegeben wird, wobei das Signal des Sensors 59 dadurch ausgelöst wird, daß der im Reservoir 12 befindliche Kraftstoff das durch die Position des Sensors 59 festgelegte Niveau unterschreitet.

Der in dem unten offenen Tauchrohr 66 befindliche zweite Sensor 68, der in einem Abstand unterhalb des ersten Sensors 59 positioniert ist und ebenfalls über die entsprechend ausgebildete Leitung 54 mit dem Rechner 57 verbunden ist, dient insbesondere dazu, die Feststellung eines Kraftstoffvolumens im Reservoir 12 zu ermöglichen, welches geringer ist als das Volumen, welches der Sensor 59 anzeigt. Auf diese Weise ist es möglich, im Fall des Nachfüllens von kleineren Kraftstoffmengen, deren Volumen zusammen mit dem noch im Reservoir 12 vorhanden gewesenen Restvolumen kleiner ist als das Gesamtvolumen des Reservoirs und somit zu einem Füllstand führen, dessen Flüssigkeitsspiegel unterhalb des Niveaus des Sensors 59 liegt, bei Unterschreiten des Sensors 68 erneut eine Verbrauchsberechnung beginnen zu lassen, die dann natürlich von einem Anfangswert ausgeht, der kleiner ist als der Wert, der der Position des Sensors 59 entspricht.

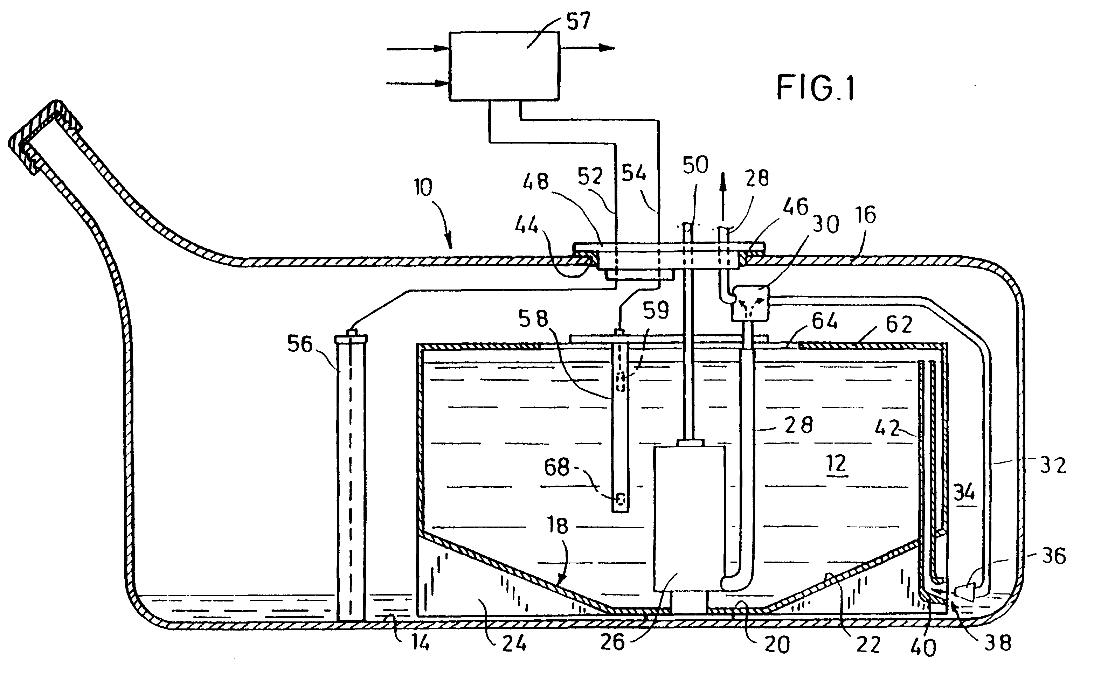

Bei der in Fig. 1 der Zeichnung dargestellten Ausführungsform würde die nachgefüllte Menge zunächst in den Hauptvorratsbehälter 34 gelangen, jedoch aus diesem durch die Saugstrahlpumpe 38 zu einem großen Teil wieder in das Reservoir 12 gefördert werden, bis der Hauptvorratsbehälter wieder leer ist, so daß unabhängig davon, in welchen Teil des Tanks die nachgefüllte Menge zunächst fließt, diese doch in das Reservoir gelangt und darin einen Anstieg des Flüssigkeitsstandes bewirkt.

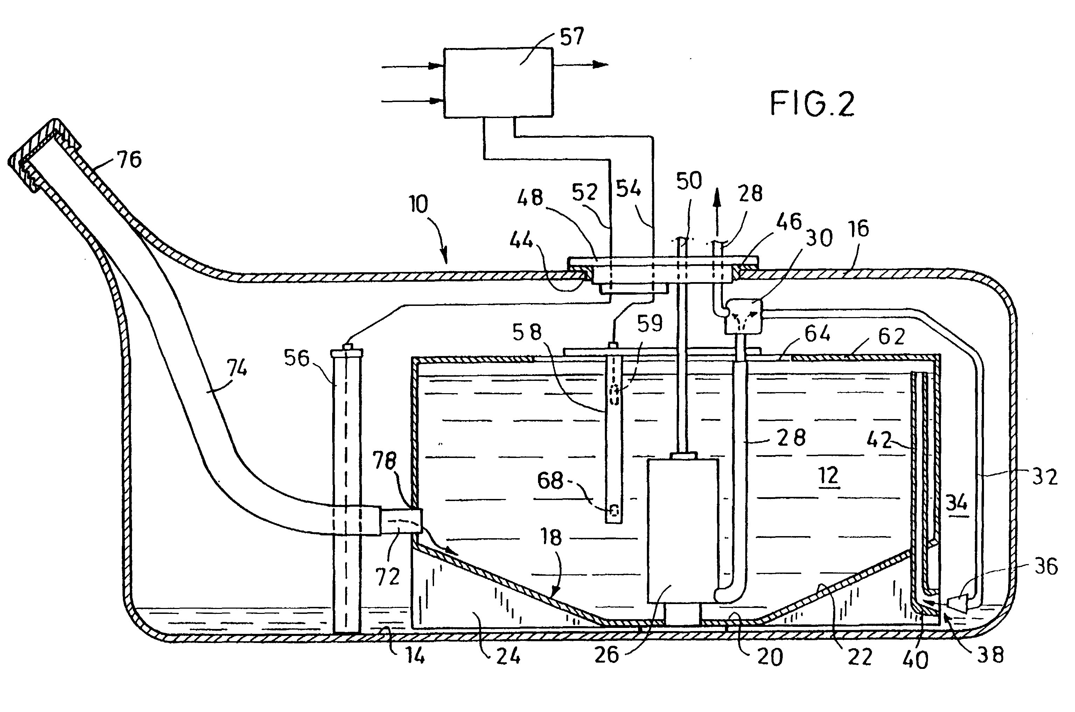

Um auf einfache Weise die Möglichkeit des Nachfüllens von Kraftstoffmengen zu berücksichtigen, deren Volumen so gering ist, daß insgesamt, also mit dem vorher noch im Reservoir befindlichen Restvolumen, sich ein Volumen ergibt, das kleiner ist als das durch die Position des ersten Sensors 59 bestimmte Volumen, kann es zweckmäßig sein, gemäß der Ausführungsform der Fig. 2 den Tank 10 mit einem besonderen Füllrohr 74 zu versehen, welches sich vom Einfüllstutzen 76 des Tanks in das Reservoir 12 erstreckt, dessen Seitenwandung dazu mit einem Durchgang 78 versehen ist, durch die der Endbereich 72 des Füllrohres flüssigkeitsdicht hindurchgeführt ist.

Da der Tank 10 durch das Füllrohr 74, welches im Bereich des Stutzens 76 flüssigkeitsdicht an dessen innerer Begrenzungswandung anliegen kann, betankt wird, fließt die gesamte in den Tank eingefüllte Kraftstoffmenge zunächst in das Reservoir 12, so daß auch bei Einfüllen einer geringen Kraftstoffmenge der Flüssigkeitsstand im Reservoir 12 sofort ansteigt und es dann lediglich eine Frage der Positionierung insbesondere des unteren Sensors 68 ist wann, d. h., bei welcher Kraftstoffmenge dieser anspricht. In jedem Fall ist sichergestellt, daß dem Tank 10 von außen zugeführter Kraftstoff zunächst in das Reservoir 12 gelangt und gegebenenfalls - bei ausreichend großer Menge - von dort durch die obere Öffnung 64 in den Hauptvorratsbehälter 34 überläuft. Bei dieser Ausgestaltung wird vermieden, daß bei Einfüllen kleiner Kraftstoffmengen das Leersignal des Füllstandsmessers 56 aufgehoben wird und demzufolge die Anzeige der jeweils im Tank befindlichen Kraftstoff-Restmenge zunächst wieder über den Füllstandmesser 56 erfolgt. In Fig. 2 sind Teile, die mit denen in Fig. 1 übereinstimmen, mit denselben Bezugszeichen versehen.

Die Anordnung des Sensors 59 in einem Abstand vom oberen Ende des Steigrohres 58 bzw. der oberen Begrenzung des Reservoirs 12 ermöglicht eine genauere Bestimmung der im Reservoir 12 zum Zeitpunkt des Beginns der Messung des Kraftstoffverbrauchs befindlichen Kraftstoffmenge, da Ungenauigkeiten durch aus dem Reservoir herausschwappenden Kraftstoff weitestgehend vermieden werden. Um Fehlschaltungen durch den Sensor 59 zu vermeiden, kann es auch zweckmäßig sein, diesen erst in dem Zeitpunkt wirksam zu stellen, in welchem der Füllstandsmesser 56 den Leerzustand des Hauptraums anzeigt.

Falls zwischen dem Zeitpunkt, zu welchem der dem Hauptraum 34 zugeordnete Füllstandsmesser 56 das Leersignal gibt, und dem Zeitpunkt, zu welchem die Verbrauchsberechnung zum Zwecke der Bestimmung der jeweils im Reservoir noch vorhandenen Kraftstoffmenge beginnt, ein Abstand liegt, ist dies ohne praktische Bedeutung, da ein solcher zeitlicher Abstand ohnehin sehr kurz ist und der während der Dauer desselben erfolgende Kraftstoffverbrauch zu gering ist, als daß er zu einer merklich unzutreffenden Anzeige der vorhandenen Kraftstoffmenge führte.

Auch bei leerem Hauptraum 34 gelangt aufgrund der kinetischen Energie des rückgeführten Kraftstoffes dieser über das Standrohr 42 praktisch vollständig wieder in das Reservoir 12.

Ferner kann abweichend von den in der Zeichnung dargestellten Ausführungen anstelle einer einstufigen elektrischen Kraftstoffpumpe in Kombination mit einer Saugstrahlpumpe auch eine zweistufige elektrische Kraftstoffpumpe verwendet werden, wobei der Boden des Reservoirs 12 mit einem Durchlaß für den aus dem das Reservoir 12 umgebenden Raum 34 anzusaugenden Kraftstoff versehen und die Anordnung so getroffen sein muß, daß bei leerem Raum 24 kein Kraftstoff aus dem Reservoir 12 in den Raum 34 durch diese Öffnung zurückfließt. Ferner müßte unter Umständen durch geeignete Maßnahmen dafür Sorge getragen werden, daß bei leerem Raum 24 die erste Stufe der zweistufigen Kraftstoffpumpe mangels Kühlung durch aus dem Raum 24 einströmenden Kraftstoff nicht zu warm wird. Die dazu ggf. zu treffenden Maßnahmen haben jedoch mit dem Kern der Erfindung nichts zu tun, da es für die Anwendung der Erfindung gleichgültig ist, wie im einzelnen der Kraftstoff aus dem Raum 34 in das Reservoir 12 gefördert wird. Wesentlich ist lediglich in beiden Fällen, daß die Menge des dem Reservoir 12 zugeführten Kraftstoffes größer ist als die Kraftstoffmenge, die dem Reservoir entnommen und dem Motor zugeführt wird.

Wie bereits erwähnt, kann die Rückschaltung auf die normale Messung der im System befindlichen Kraftstoffmenge durch den dem Raum 34 zugeordneten Füllstandsmesser 56 beim nächsten Füllen des Tankes durch ein durch diesen Füllstandmesser ausgelöstes Signal bewirkt werden, durch welches der Rechner 57 veranlaßt wird, auf den normalen Betrieb für die Messung der Kraftstoffmenge im Tanksystem zurückzuschalten.

## Patentansprüche

1. Verfahren zur Bestimmung der im Kraftstofftank eines Kraftfahrzeuges jeweils befindlichen Kraftstoffmenge, wobei der Kraftstofftank einen Hauptvorratsbehälter (34), der mit einem Füllstandsmesser (56) zur Bestimmung des darin jeweils befindlichen Kraftstoffes versehen ist, und ein Reservoir (12) aufweist, das im Vergleich zum Hauptvorratsbehälter (34) ein wesentlich kleineres Volumen hat und in sich geschlossen ist und von einer Pumpe (38) aus dem Hauptvorratsbehälter (34) mit Kraftstoff versorgt wird, **dadurch gekennzeichnet, daß** das im Kraftstofftank jeweils befindliche Restvolumen an Kraftstoff anhand des Kraftstoffverbrauches errechnet wird, wobei nach Entleerung des Hauptvorratsbehälters (34) die jeweils dann noch im Reservoir (12) befindliche Kraftstoff-Restmenge als Differenz aus einem definierten Volumen des Reservoirs (12) und dem über die Zeit summierten Kraftstoffverbrauch errechnet wird, und daß das Signal zur Festlegung des Zeitpunkts, von welchem die Bestimmung der Restmenge im Reservoir (12) durch die Verbrauchsberechnung beginnt, in Abhängigkeit vom Unterschreiten eines bestimmten Füllstands im Reservoir (12) ausgelöst wird.

2. Verfahren nach Anspruch 1, **dadurch gekennzeichnet, daß** der Kraftstoffverbrauch aus Betriebsdaten der Einrichtung für die Motorsteuerung errechnet wird.

3. Verfahren nach Anspruch 1, **dadurch gekennzeichnet, daß** das Signal zur Festlegung des Zeitpunktes, von welchem die Bestimmung der Restmenge im Reservoir (12) durch die Verbrauchsberechnung beginnt, in Abhängigkeit von der Anzeige des Leerzustandes im Hauptvorratsbehälter (34) und vom Unterschreiten eines bestimmten Füllstands im Reservoir (12) ausgelöst wird.

4. Verfahren nach Anspruch 1, **dadurch gekennzeichnet, daß** das Signal, durch welches die Verbrauchsberechnung ausgelöst wird, dazu benutzt wird, die Reserveanzeige am Armaturenbrett auszulösen.

5. Verfahren nach Anspruch 1, **dadurch gekennzeichnet, daß** der Motor des Kraftfahrzeugs nach Unterschreiten einer bestimmten Mindest-Kraftstoffmenge im Reservoir automatisch abgeschaltet wird.

6. Verfahren nach Anspruch 5, **dadurch gekennzeichnet, daß** vor dem automatischen Abschalten des Motors eine entsprechende Anzeige für den Fahrer in Abhängigkeit vom Füllstand im Reservoir (12) ausgelöst wird.

7. Verfahren nach Anspruch 1, **dadurch gekennzeichnet, daß** ein Signal zur Festlegung eines neuen Zeitpunkts, von welchem die Bestimmung der Restmenge im Reservoir (12) durch die Berechnung des Verbrauchs beginnt, in Abhängigkeit vom Unterschreiten eines zweiten Füllstands im Reservoir (12) ausgelöst wird.

8. Einrichtung zur Bestimmung der im Kraftstofftank eines Kraftfahrzeuges jeweils befindlichen Kraftstoffmenge, wobei der Kraftstofftank einen Hauptvorratsbehälter (24), der mit einem Füllstandsmesser (56) zur Bestimmung des darin jeweils befindlichen Kraftstoffes versehen ist, und ein Restmengenreservoir (12) aufweist, das im Vergleich zum Hauptvorratsbehälter (34) ein wesentlich kleineres Volumen hat und in sich geschlossen ist und von einer Pumpe (38) aus dem Hauptvorratsbehälter (34) mit Kraftstoff versorgt wird, **dadurch gekennzeichnet, daß** ein dem Reservoir (12) zugeordneter erster Sensor (58) vorgesehen ist, der nach Entleerung des Hauptvorratsbehälters (34) ein Signal abgibt, welches einen Rechenvorgang auslöst, durch den die jeweils noch im Reservoir (12) befindliche Kraftstagf-Restmenge als Differenz aus einem definierten Volumen des Reservoirs (12) und dem über die Zeit summierten Kraftstoffverbrauch bestimmt wird.

9. Einrichtung nach Anspruch 8, **dadurch gekennzeichnet, daß** der dem Hauptvorratsbehälter (34) zugeordnete Füllstandsmesser (56) bei Erreichen des Leerzustandes des Hauptvorratsbehälters (34) ein Signal bewirkt, welches für die Auslösung der Berechnung des Kraftstoffverbrauchs Verwendung findet, wobei das Signal zur Festlegung des Zeitpunktes, von welchem die Bestimmung der Restmenge im Reservoir (12) durch die Verbrauchsberechnung beginnt, in Abhängigkeit von der Leeranzeige im Hauptvorratsbehälter (34) und vom Unterschreiten eines bestimmten Füllstands im Reservoir (12) ausgelöst wird.

10. Einrichtung nach Anspruch 8, **dadurch gekennzeichnet, daß** das Reservoir (12) oberseitig mit einer Öffnung versehen ist, die von einem innenseitig am Reservoir umlaufenden Rand begrenzt ist.

11. Einrichtung nach Anspruch 8, **dadurch gekennzeichnet, daß** das Reservoir (12) so ausgebildet ist, daß Bewegungen des im Reservoir befindlichen Kraftstoffes zumindest weitgehend reduziert werden.

12. Einrichtung nach Anspruch 8, **dadurch gekennzeichnet, daß** das Reservoir (12) zusätzlich mit wenigstens einem weiteren Sensor (68) versehen ist, der unterhalb des ersten Sensors (59) angeordnet ist.

13. Einrichtung nach Anspruch 8, **dadurch gekennzeichnet, daß** das Reservoir ein Volumen von 2 bis 12 l aufweist.

14. Einrichtung nach Anspruch 8, **dadurch gekennzeichnet, daß** das Reservoir ein Volumen aufweist, das 2 - 15% des Volumens des Tanks (10) beträgt.

15. Einrichtung nach Anspruch 8, **dadurch gekennzeichnet, daß** die Einfüllöffnung des Tanks (10) mit dem Reservoir (12) verbunden ist derart, daß zumindest der größte Teil des in den Tank (10) eingeführten Kraftstoffes in das Reservoir und von diesem gegebenenfalls in den Hauptvorratsbehälter (34) gelangt.

## Claims

1. A process for determining the respective amount of fuel in the fuel tank of a motor vehicle, wherein the fuel tank has a main storage reservoir (35) provided with a filling level meter (56) for determining the respective fuel contained therein, and a residual amount reservoir (12) which is of substantially smaller volume in comparison with the main storage reservoir (34) and which is closed in itself and which is supplied with fuel by a pump (38) from the main storage reservoir (34), **characterised in that** the residual volume of fuel respectively disposed in the fuel tank is calculated on the basis of the fuel consumption, wherein after emptying of the main storage reservoir (34) the respective residual amount of fuel which is then still contained in the residual amount reservoir (12) is calculated as a difference from a defined volume of the residual amount reservoir (12) and the fuel consumption summed over time, and that the signal for establishing the moment in time from which determination of the residual amount of fuel in the residual amount reservoir (12) by means of consumption calculation begins is triggered in dependence on the fuel falling below a given filling level in the residual amount reservoir (12).

2. A process according to claim 1 **characterised in that** the fuel consumption is calculated from operational data of the device for engine management.

3. A process according to claim 1 **characterised in that** the signal for establishing the moment in time from which determination of the residual amount of fuel in the residual amount reservoir (12) by means of consumption calculation begins is triggered in dependence on the display of the empty condition in the main storage reservoir (34) and on the fuel falling below a given filling level in the residual amount reservoir (12).

4. A process according to claim 1 **characterised in that** the signal by which the consumption calculation is triggered is used to trigger the reserve display on the instrument panel.

5. A process according to claim 1 **characterised in that** the engine of the motor vehicle is automatically shut off after the fuel falls below a given minimum amount of fuel in the residual amount reservoir.

6. A process according to claim 5 **characterised in that** before the engine is automatically shut off a corresponding display is triggered for the driver in dependence on the filling level in the residual amount reservoir (12).

7. A process according to claim 1 **characterised in that** a signal for establishing a new time from which determination of the residual amount in the residual amount reservoir (12) by calculation of fuel consumption begins is triggered in dependence on the fuel falling below a second filling level in the residual amount reservoir (12).

8. Apparatus for determining the respective amount of fuel in the fuel tank of a motor vehicle, wherein the fuel tank has a main storage reservoir (34) provided with a filling level meter (56) for determining the respective fuel contained therein, and a residual amount reservoir (12) which is of substantially smaller volume in comparison with the main storage reservoir (34) and which is closed in itself and which is supplied with fuel by a pump (38) from the main storage reservoir (34), **characterised in that** there is provided a first sensor (56) which is associated with the residual amount reservoir (12) and which after emptying of the main storage reservoir (34) outputs a signal triggering a calculation procedure by which the respective residual amount of fuel still contained in the residual amount reservoir (12) is determined as a difference from a defined volume of the residual amount reservoir (12) and the fuel consumption summed over time.

9. Apparatus according to claim 8 **characterised in that** the filling level meter (56) associated with the main storage reservoir (34), when the empty condition of the main storage reservoir (34) is reached, produces a signal which is used for triggering calculation of the level of fuel consumption, wherein the signal for establishing the moment in time from which determination of the residual amount in the residual amount reservoir (12) by means of consumption calculation begins is triggered in dependence on the empty display in the main storage reservoir (34) and on the fuel falling below a given filling level in the residual amount reservoir (12).

10. Apparatus according to claim 8 **characterised in that** the residual amount reservoir (12) is provided in its top with an opening which is defined by an edge extending peripherally on the inside on the residual amount reservoir.

11. Apparatus according to claim 8 **characterised in that** the residual amount reservoir (12) is so designed that movements of the fuel therein are at least substantially reduced.

12. Apparatus according to claim 8 **characterised in that** the residual amount reservoir (12) is additionally provided with at least one further sensor (68) which is arranged beneath the first sensor (59).

13. Apparatus according to claim 8 **characterised in that** the residual amount reservoir is of a volume of between 2 and 12 liters.

14. Apparatus according to claim 8 **characterised in that** the residual amount reservoir is of a volume which is between 2 and 15% of the volume of the tank (10).

15. Apparatus according to claim 8 **characterised in that** the filling opening of the tank (10) is connected to the residual amount reservoir (12) in such a way that at least the major part of the fuel introduced into the tank (10) passes into the residual amount reservoir and from same possibly into the main storage reservoir (34).

## Revendications

1. Procédé pour calculer la quantité de carburant restant dans le réservoir de carburant d'un véhicule donné, le réservoir comprenant un récipient de réserve principal (34), qui est doté d'un indicateur de niveau (56) pour le calcul du carburant se trouvant à l'intérieur, et une réserve (12), qui a un volume nettement inférieur par rapport au récipient de réserve principal (34) et est fermé sur lui-même et alimenté en carburant par une pompe (38) provenant du récipient de réserve principal (34), **caractérisé en ce que** le volume résiduel de carburant se trouvant dans le réservoir concerné est calculé à l'aide de la consommation de carburant, la quantité résiduelle de carburant se trouvant encore dans la réserve (12) étant calculée après le vidage du récipient de réserve principal (34) comme différence à partir d'un volume défini de la réserve (12) et de la consommation de carburant calculée dans le temps, et **en ce que** le signal pour déterminer le moment à partir duquel commence le calcul de la quantité résiduelle dans la réserve (12) par le calcul de la consommation est déclenché en fonction du moment où l'on passe au-dessous d'un certain niveau de remplissage dans la réserve (12).

2. Procédé selon la revendication 1, **caractérisé en ce que** la consommation de carburant est calculée à partir des données d'exploitation du dispositif pour la commande du moteur.

3. Procédé selon la revendication 1, **caractérisé en ce que** le signal pour déterminer le moment à partir duquel commence le calcul de la quantité résiduelle dans la réserve (12) par le calcul de la consommation est déclenché en fonction de l'affichage de l'état vide dans le récipient de réserve principal (34) et du moment où l'on passe au-dessous d'un certain niveau de remplissage dans la réserve (12).

4. Procédé selon la revendication 1, **caractérisé en ce que** le signal, par lequel le calcul de la consommation est déclenché, est utilisé pour déclencher l'affichage de la réserve sur le tableau de bord.

5. Procédé selon la revendication 1, **caractérisé en ce que** le moteur du véhicule est déconnecté automatiquement après qu'on soit passé au-dessous d'une certaine quantité minimale de carburant dans la réserve.

6. Procédé selon la revendication 5, **caractérisé en ce que**, avant la déconnexion automatique du moteur, un affichage approprié pour le conducteur est déclenché en fonction du niveau de remplissage dans la réserve (12).

7. Procédé selon la revendication 1, **caractérisé en ce qu'**un signal pour déterminer un nouvel instant à partir duquel commence le calcul de la quantité résiduelle dans la réserve (12) par le calcul de la consommation est déclenché en fonction du moment où l'on passe au-dessous d'un deuxième niveau de remplissage dans la réserve (12).

8. Dispositif pour calculer la quantité de carburant se trouvant dans le réservoir de carburant d'un véhicule donné, le réservoir de carburant comprenant un récipient de réserve principal (34), qui est doté d'un indicateur de niveau (56) pour le calcul du carburant se trouvant à l'intérieur, et comprend une réserve de quantité résiduelle (12), laquelle a un volume sensiblement inférieur par rapport au récipient de réserve principal (34), est fermée sur elle-même et est alimentée en carburant par une pompe (38) à partir du récipient de réserve principal (34), **caractérisé en ce qu'**il est prévu un premier capteur (59) attribué à la réserve (12), qui émet un signal après le vidage du récipient de réserve principal (34), lequel déclenche une opération de calcul, par laquelle la quantité résiduelle de carburant se trouvant encore dans la réserve (12) est calculée comme différence à partir d'un volume défini de la réserve (12) et de la consommation de carburant cumulée dans le temps.

9. Dispositif selon la revendication 8, **caractérisé en ce que** l'indicateur de niveau (56) attribué au récipient de réserve principal (34) émet un signal lorsqu'on atteint le niveau vide du récipient de réserve principal (34) qui est utilisé pour le déclenchement du calcul de .la consommation en carburant, le signal pour déterminer le moment à partir duquel commence le calcul de la quantité résiduelle dans la réserve (12) par le calcul de la consommation étant déclenché en fonction de l'indication du vide dans le récipient de réserve principal (34) et par le sous-dépassement d'un certain niveau de remplissage dans la réserve (12).

10. Dispositif selon la revendication 8, **caractérisé en ce que** la réservé (12) est pourvue sur le dessus d'une ouverture qui est limitée par un bord sur le pourtour intérieur de la réserve.

11. Dispositif selon la revendication 8, **caractérisé en ce que** la réserve (12) est conçue de telle sorte que des mouvements du carburant se trouvant dans la réserve sont réduits du moins en grande partie.

12. Dispositif selon la revendication 8, **caractérisé en ce que** la réserve (12) est pourvue en supplément d'au moins un autre capteur (68), qui est disposé au-dessous du premier capteur (59).

13. Dispositif selon la revendication 8, **caractérisé en ce que** la réserve présente un volume de 2 à 12 litres.

14. Dispositif selon la revendication 8, **caractérisé en ce que** la réserve présente un volume qui représente 2 à 15 % du volume du réservoir (10).

15. Dispositif selon la revendication 8, **caractérisé en ce que** l'ouverture de remplissage du réservoir (10) est reliée à la réserve (12) de telle sorte qu'au- moins la plus grosse partie du carburant introduit dans le réservoir (10) parvient dans la réserve et de celle-ci éventuellement dans le récipient de réserve principal (34).
